# EUROPÄISCHE PATENTSCHRIFT

(11) **EP 3 336 368 B1**
(45) Veröffentlichungstag und Bekanntmachung des Hinweises auf die Patenterteilung: **16.09.2020**
(21) Anmeldenummer: 17168825.2
(22) Anmeldetag: 28.04.2017
(51) Int. Cl.: F16B 23/00, B25B 23/10

(54) **VERFAHREN ZUM DREHFESTEN VERBINDEN ZWEIER BAUTEILE**
METHOD FOR THE STATIONARY CONNECTION OF TWO COMPONENTS
PROCÉDÉ DE LIAISON SOLIDAIRE EN ROTATION DE DEUX COMPOSANTS

(30) Priorität: 16.12.2016 DE 102016124719
(43) Veröffentlichungstag der Anmeldung: 20.06.2018
(73) Patentinhaber: Bongartz, Nicole, 41464 Neuss (DE)
(72) Erfinder: Bongartz, Nicole, 41464 Neuss (DE)
(74) Vertreter: Albrecht, Ralf

(56) Entgegenhaltungen:
- WO-A1-2013/062895
- DE-A1-102005 011 734
- US-A1- 2010 269 644

## Beschreibung

Verfahren zum drehfesten Verbinden zweier Bauteile Die vorliegende Erfindung betrifft ein Verfahren zum drehfesten Verbinden zweier Bauteile, nämlich einer Schraube und eines Drehwerkzeugs, bezüglich der Längsachse des als Schraube ausgebildeten Bauteils, wobei eines der Bauteile insbesondere an seinem einen freien Ende ein äußeres Mitnahmeprofil mit außenliegenden Antriebsflächen und das andere Bauteil insbesondere an seinem einen freien Ende ein zu dem äußeren Mitnahmeprofil komplementäres inneres Mitnahmeprofil mit innenliegenden Antriebsflächen aufweist, wobei die Mitnahmeprofile jeweils eine Profilachse definieren und die Profilachse des als Schraube ausgebildeten Bauteils koaxial zu dessen Längsachse verläuft, bei dem die Mitnahmeprofile der Bauteile axial zusammengesteckt werden, um durch das Zusammenwirken der Mitnahmeprofile eine formschlüssige, drehfeste Verbindung der Bauteile zu erzielen.

Zudem betrifft die Offenbarung ein Bauteil in der Form einer Schraube mit einem Schaft, der an seinem einen freien Ende - dem Kopfende - ein Mitnahmeprofil mit innen- oder außenliegenden Antriebsflächen aufweist, das eine koaxial zum Schaft verlaufende Profilachse definiert.

Ferner betrifft die Offenbarung ein Bauteil in der Form eines Drehwerkzeugs, das an einem Ende ein Mitnahmeprofil mit innen- oder außenliegenden Antriebsflächen aufweist, das eine Profilachse definiert,

Schließlich betrifft die Offenbarung Kit mit einer Schraube und einem Drehwerkzeug.

Schrauben und Drehwerkzeuge sind aus dem Stand der Technik in unterschiedlichen Ausgestaltungen bekannt. Dabei umfassen die Schrauben einen Schraubenschaft mit einem Außengewinde, an dessen oberem Endbereich ein Mitnahmeprofil zur Kopplung mit einem Drehwerkzeug vorgesehen ist, das in der Regel an einem Schraubenkopf ausgebildet ist. Die Drehwerkzeuge sind beispielsweise in Form von Ring- oder Maulschlüsseln ausgebildet oder umfassen auswechselbare Bits, die mittels eines Bithalters mit einem Antrieb, beispielsweise in Form eines Handgriffs oder eines Ackuschraubers verbunden werden. Alternativ kann der Bithalter über einen Adapter zum wechselnden Einsatz mit einem Schraubendrehergriff oder einem abgewinkelten Griff, mit einer Knarre, einem Drehmomentschlüssel, einem Akkuschrauber oder einem Ratschenschrauber verbunden werden.

Schraube und Drehwerkzeug werden zum Übertragen eines Drehmoments von dem Drehwerkzeug auf die Schraube mit komplementär zueinander ausgebildeten Mitnahmeprofilen angeboten. Hierzu weist eines der beiden Bauteile an einem seiner freien Enden ein äußeres Mitnahmeprofil mit außenliegenden Antriebsflächen und das andere Bauteil an seinem einen freien Ende ein zu dem äußeren Mitnahmeprofil komplementäres inneres Mitnahmeprofil mit innenliegenden Antriebsflächen auf. Die Mitnahmeprofile sind beispielsweise in der Form eine Innensechskants, eines Außensechskants, eines Torx-Profils sowie eines Kreuzschlitzprofils oder Schlitzprofils ausgebildet. Nach dem Koppeln des inneren Mitnahmeprofils mit dem äußeren Mitnahmeprofil liegen die Mitnahmeprofile mit Spiel aneinander an. Dies führt dazu, dass sich die Mitnahmeprofile in ungewollter Weise voneinander lösen können es weiterhin auch nicht möglich ist, die Mitnahmeprofile axial sauber zueinander auszurichten. Um die Handhabung beim Eindrehen und Lösen der Schraube mit dem Drehwerkzeug zu vereinfachen, werden zwar Drehwerkzeuge, die mit einem Magnet versehen sind, oder ferromagnetische Drehwerkzeuge, die mit einem Magnet magnetisierbar sind, angeboten. Dies ist jedoch mit zusätzlichem Aufwand verbunden. Außerdem kann durch die Verwendung eines magnetischen Drehwerkzeugs eine koaxiale Ausrichtung der Mitnahmeprofile auch nicht erreicht werden. Eine solche koaxiale Ausrichtung ist jedoch erforderlich, um Schraubenverbindungen in automatische Herstellungsprozesse einbinden zu können. Die Offenbarung WO 2013/062895 A1 beschreibt ein Verfahren nach dem Stand der Technik.

Aufgabe der vorliegenden Erfindung ist es daher, ein Verfahren zum drehfesten Verbinden einer Schraube und eines Drehwerkzeugs der eingangs genannten Art derart auszugestalten, dass diese Bauteile leicht in einen automatisierten Arbeitsprozess eingebunden werden können. Weiterhin sollen eine Schraube und ein Drehwerkzeug sowie ein Kit, die eine Schraube und ein Drehwerkzeug umfassen, angegeben werden, die zur Durchführung des Verfahrens geeignet sind.

Die Aufgabe ist erfindungsgemäß bei einem Verfahren gemäß dem Anspruch 1 gelöst. Das Verfahren beschreibt, dass ein Bauteil mit einem äußeren Mitnahmeprofil, dessen Antriebsflächen gegenüber der jeweiligen Profilachse geneigt sind und sich zu dem freien Ende des Bauteils hin der jeweiligen Profilachse annähern, und ein Bauteil mit einem inneren Mitnahmeprofil, dessen Antriebsflächen gegenüber der jeweiligen Profilachse geneigt sind und sich zu dem freien Ende des Bauteils von der jeweiligen Profilachse entfernen, verwendet werden, wobei die Mitnahmeprofile derart komplementär zueinander gewählt sind, dass die geneigten Antriebsflächen der Bauteile beim Zusammenstecken der Bauteile derart in Kontakt miteinander kommen, dass eine kraftschlüssige und/oder klemmende Verbindung zwischen den Bauteilen entsteht, über welche die Bauteile axial miteinander verbunden werden.

Der vorliegenden Erfindung liegt somit die Überlegung zugrunde beim Zusammenstecken der beiden Bauteile zusätzlich zu einer formschlüssigen und drehfesten Verbindung auch eine kraftschlüssige und/oder klemmende Verbindung zwischen Schraube und Drehwerkzeug herzustellen, über welche die Bauteile axial miteinander verbunden und koaxial zueinander ausgerichtet sind. Hierdurch werden die beiden Bauteile in koaxialer Ausrichtung der Mitnahmeprofile spielfrei miteinander verbunden, so dass die Bauteile in automatisierten Prozessen einsetzbar sind. Um die kraftschlüssige und/oder klemmende Verbindung zwischen den beiden Bauteilen zu erzielen, weisen die Bauteile korrespondierende Mitnahmeprofile auf mit konusartig geneigten Angriffsflächen. Die Mitnahmeprofile sind derart komplementär zueinander gewählt, dass die geneigten Antriebsflächen der Bauteile beim Zusammenstecken der Bauteile derart in Kontakt miteinander kommen, dass eine koaxiale Ausrichtung der Bauteile gewährleistet ist.

Gemäß der Erfindung sind die Mitnahmeprofile derart komplementär zueinander ausgebildet, dass ihre geneigten Antriebsflächen beim axialen Zusammenstecken flächig miteinander in Kontakt kommen. Hierbei wird die Kraftübertragung von dem Drehwerkzeug auf die Schraube optimiert.

Der Neigungswinkel der Antriebsflächen zur Profilachse wird in Abhängigkeit von der Länge der Antriebsflächen in der Profilachsenrichtung gewählt. Dabei gilt grundsätzlich, dass je größer die Erstreckung der Antriebsflächen entlang der jeweiligen Profilachse ist, umso größer der Neigungswinkel der geneigten Antriebsflächen zur Profilachse ist. Bevorzugt werden Bauteile verwendet, bei denen die geneigten Antriebsflächen der Mitnahmeprofile um wenigstens 0,1°, insbesondere um wenigstens 0,3°, bevorzugt um wenigstens 1°, besonders bevorzugt um wenigstens 3° gegenüber der jeweiligen Profilachse geneigt sind. Dabei werden bevorzugt Bauteile verwendet werden, bei denen die geneigten Antriebsflächen der Mitnahmeprofile um höchstens 12°, insbesondere um höchstens 10°, bevorzugt um höchstens 8°, besonders bevorzugt um höchstens 5° geneigt sind.

Vorzugsweise werden Bauteile verwendet, bei denen die Antriebsflächen der Mitnahmeprofile stetig geneigt sind und insbesondere eine konstante Steigung aufweisen. Alternativ kann die tangentiale Steigung der Antriebsflächen entlang der Profilachsenrichtung variieren.

Gemäß der vorliegenden Erfindung werden Bauteile verwendet, deren Mitnahmeprofile die Querschnittskontur eines Vielkants, insbesondere eines 2-, 4- oder 6-Kants mit abgerundeten oder spitz zulaufenden Kanten, aufweisen. Hierbei verbessert sich die Kraftübertragung mit steigender Anzahl an Kanten. Bei einer hohen Anzahl an Kanten können jedoch durch Ablagerungen in den Mitnahmeprofilen das vollständige Zusammenstecken der Bauteile verhindert werden, wodurch die Bauteile bei einer Übertragung eines Drehmoments beschädigt werden können. Mitnahmeprofile in Form eines 6- Kants ermöglichen eine gute Kraftübertragung, gleichzeitig sind sie nicht so filigran ausgebildet, dass sich viele Ablagerungen ansammeln können und haben sich daher besonders bewährt.

Gemäß der Erfindung werden ein Bauteil mit einem äußeren Mitnahmeprofil, bei dem die zwischen den Kanten liegenden geneigten Antriebsflächen im Querschnitt konkav, d.h. nach innen gekrümmt ausgebildet sind, und ein Bauteil mit einem komplementären inneren Mitnahmeprofil verwendet. Dabei werden Bauteile verwendet bei denen die konkaven Antriebsflächen im Querschnitt kreisbogensegmentförmig gekrümmt ausgebildet ist. Durch die konkave Krümmung weisen die Antriebsflächen im Vergleich zu einem Mitnahmeprofil gleicher Größe mit ebenen Antriebsflächen eine größere Fläche auf und ermöglichen somit eine bessere Kraftübertragung von dem Drehwerkzeug auf die Schraube, wenn das Drehwerkzeug eine Drehbewegung um die jeweilige Profilachse ausführt.

Gemäß einer Ausgestaltung der vorliegenden Erfindung werden Bauteile verwendet, deren Mitnahmeprofile den Querschnitt eines Vielrunds besitzen.

Beispielsweise können Bauteile verwendet werden, deren Mitnahmeprofile den Querschnitt eines Vielrunds mit spitzbogenförmigen Armen aufweisen.

Dabei können Bauteile verwendet werden, deren Mitnahmeprofile den Querschnitt eines Vielrunds mit sechs Armen besitzen. Alternativ können Bauteile verwendet werden, deren Mitnahmeprofile den Querschnitt eines Vielrunds mit zwei oder vier Armen aufweisen.

Auf diese Weise brauchen die Mitnahmeprofile der beiden zu verbindenden Bauteile nicht exakt zueinander korrespondierend ausgebildet zu sein. Vielmehr ist es möglich das Mitnahmeprofi, welches den Querschnitt eines Vielrunds mit spitzbogenförmigen Armen aufweist, auch mit Mitnahmeprofilen zu verbinden, die einen Querschnitt in Form eines Vielkants oder eines Vielrunds, insbesondere eines Torx-Profils, in derselben Größe aufweisen.

Ebenso können Bauteile verwendet werden, deren Mitnahmeprofile als Torx-Profil mit zur jeweiligen Profilachse geneigten Antriebsflächen ausgebildet sind. Durch den Einsatz von hexalobulären Torx-Profilen wie Torx, Torx-TR, Torx Plus und Torx Plus Security können hohe Drehmomente von dem Drehwerkzeug auf die Schraube übertragen werden, ohne die Schraube und das Drehwerkzug zu beschädigen.

Bevorzugt verringert sich der Durchmesser eines Außenkreises um das Mitnahmeprofil über dessen Länge in der Richtung der Profilachse um höchstens 25 %, insbesondere um höchstens 20 %, bevorzugt um höchstens 15 %, besonders bevorzugt um höchstens 10 %. Beispielsweise reduziert sich der Durchmesser des Außenkreises um das Mitnahmeprofil um 6 %, wenn die Antriebsflächen des Mitnahmeprofils einen Neigungswinkel von 3° zur Profilachse aufweisen und sich die Antriebsflächen entlang der Profilachse um 0,6 cm erstrecken. Bei einer Erstreckung der Antriebsflächen entlang der Profilachse von 0,6 cm und einem Neigungswinkel der Antriebsflächen zur Profilachse von 8° reduziert sich der Durchmesser des Außenkreises hingegen um 10%. Ferner reduziert sich der Durchmesser des Außenkreises um das Mitnahmeprofil um 13 %, wenn die Antriebsflächen sich entlang der Profilachse um 3, cm erstrecken und die Antriebsflächen um 12° zur Profilachse geneigt sind.

In allgemein üblicher Weise kann das Drehwerkzeug in Form eines Bits ausgebildet sein, in dem ein inneres Mitnahmeprofil ausgebildet ist.

Alternativ kann das Drehwerkzeug in Form eines Ringschlüssels ausgebildet sein, der einen Werkzeugschaft aufweist, der an wenigstens einem axialen Ende ein inneres Mitnahmeprofil aufweist, das das Drehwerkzeug quer zu dessen Schaftachse durchsetzt.

Bezüglich weiterer Ausgestaltungen und Vorteile der Schraube und des Drehwerkzeugs wird zur Vermeidung von Wiederholungen auf die vorstehenden Ausführungen im Zusammenhang mit dem erfindungsgemäßen Verfahren zum drehfesten Verbinden zweier Bauteile nämlich einer Schraube und eines Drehwerkzeugs verwiesen.

Weitere Merkmale und Vorteile der vorliegenden Erfindung werden anhand der nachfolgenden Beschreibung einer Ausführungsform der Bauteile unter Bezugnahme auf die beiliegende Zeichnung deutlich. In der Zeichnung zeigt:
- Figur 1: eine schematische Vorderansicht einer Schraube mit einem äußeren Mitnahmeprofil,

- Figur 2: eine perspektivische Ansicht der Schraube aus Figur 1,
- Figur 3: eine Draufsicht auf den Schraubenkopf der Schraube aus Figur 1,
- Figur 4: eine perspektivische Ansicht eines als Bit ausgebildeten Werkzeugs mit innerem Mitnahmeprofil,

- Figur 5: das Bit aus Figur 4 im Längsschnitt,
- Figur 6: das Bit aus Figur 4 in Draufsicht,
- Figur 7: das Bit aus Figur 4 von unten,
- Figur 8: perspektivische Ansicht der Schraube aus den Figuren 1 bis 3 und dem Bit gemäß den Figuren 4 bis 7 in teilweise zusammengeschobenem Zustand,
- Figur 9: die Anordnung aus Figur 8 in Draufsicht,
- Figur 10: die Anordnung aus Figur 8 im weiter zusammengeschobenen Zustand in perspektivischer Darstellung,
- Figur 11: die Anordnung aus Figur 10 in Draufsicht auf das Bit,
- Figuren 12-14: den Vorgang des axialen Zusammensteckens der Schraube und des Bits im Längsschnitt,
- Figur 15: die Einzelheit X aus Figur 14 in vergrößerter Darstellung,
- Figur 16: eine schematische Vorderansicht einer Schraube mit einem inneren Mitnahmeprofil und eines korrespondierenden Bits gemäß,

- Figur 17: eine vergrößerte Ansicht der Schraube und des Bits aus Figur 16,
- Figur 18: eine perspektivische Ansicht der Schraube und des Bits aus Figur 16,
- Figuren 19a-d: den Vorgang des Zusammensteckens der Schraube und des Bits aus Figur 16,
- Figur 20: eine schematische Vorderansicht einer Schraube mit einem inneren Mitnahmeprofil und eines korrespondierenden Bits gemäß,
- Figur 21: eine perspektivische Ansicht der Schraube und des korrespondierenden Bits aus Figur 20, und

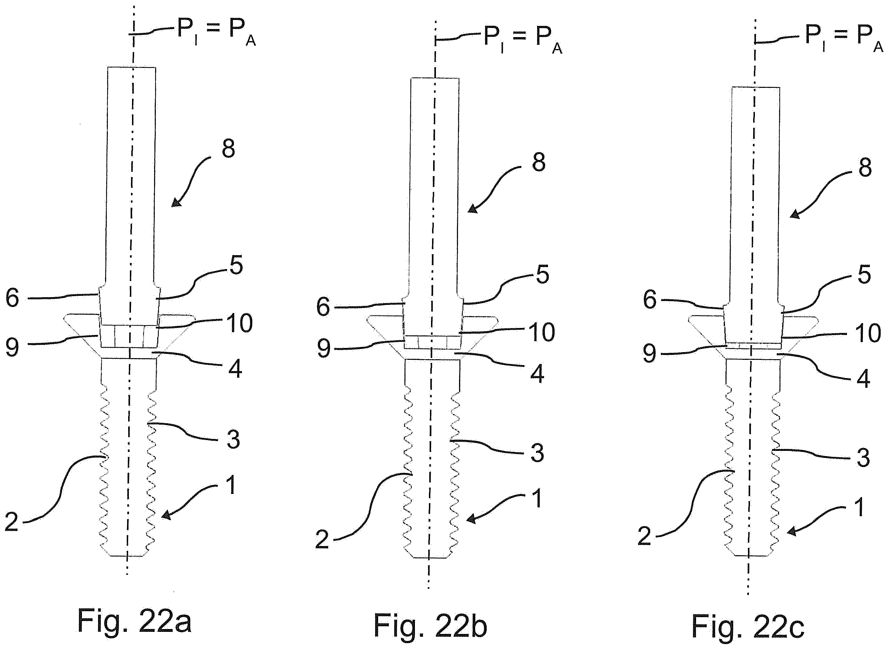

- Figuren 22a-c: den Vorgang des Zusammensteckens der Schraube und des korrespondierenden Bits aus Figur 21.

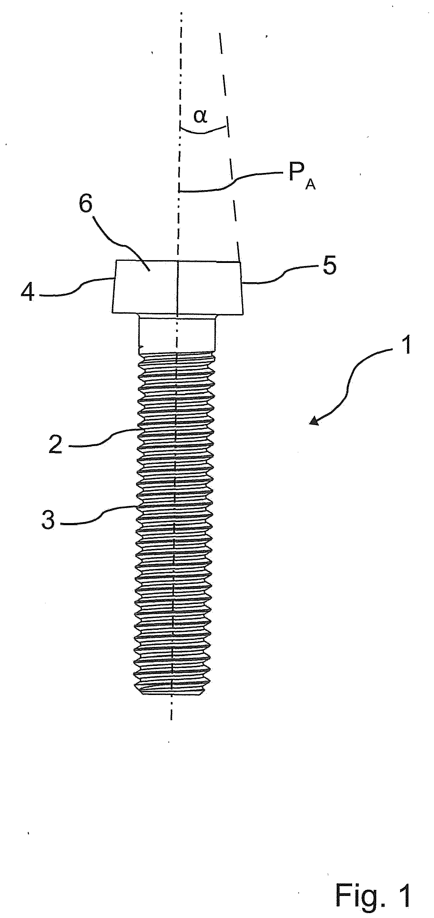

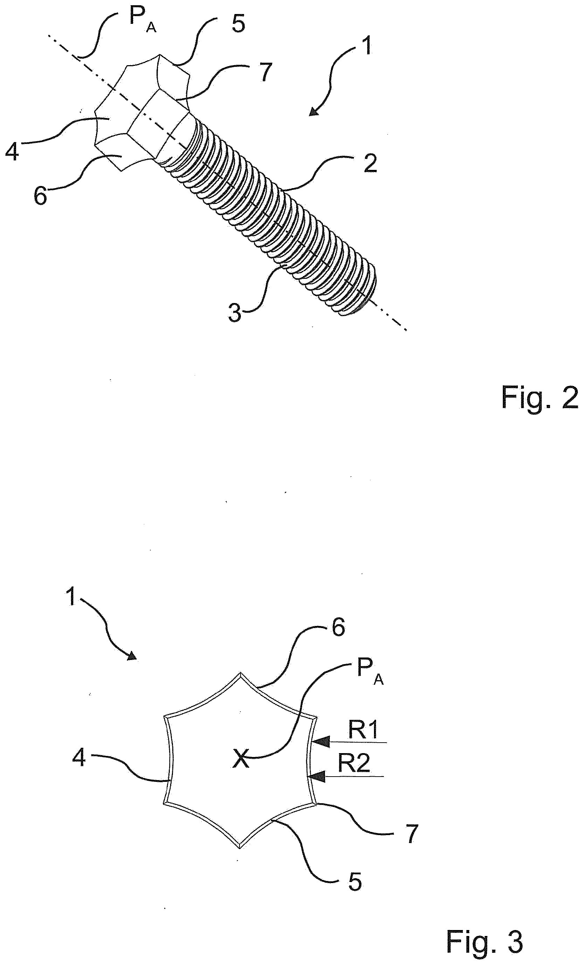

In den Figuren 1 bis 3 ist eine Schraube 1 dargestellt. Die Schraube 1 umfasst einen Schaft 2, der ein Außengewinde 3 trägt und eine Längsachse der Schraube 1 definiert. An dem oberen Ende des Schafts 2 ist ein Schraubenkopf 4 vorgesehen, der an seiner Außenseite ein äußeres Mitnahmeprofil 5 mit außenliegenden Antriebsflächen 6 aufweist, das eine koaxial zu der Längsachse der Schraube 1 liegende Profilachse P_{A} definiert. Konkret ist eine M8-Schraube 1 mit einer Schaftlänge von 40 mm und einer Kopfhöhe von 5,5 mm dargestellt. Wie die Figuren gut erkennen lassen, besitzt das äußere Mitnahmeprofil 5 im Querschnitt bzw. in der Draufsicht die Form eines regelmäßen Sechskants, wobei die zwischen den Kanten 7 liegenden Antriebsflächen 6 gegenüber der Profilachse P_{A} bzw. der Längsachse der Schraube 1 unter einem Winkel α = 3° geneigt sind, so dass sie sich zu dem freien Ende des Schraubenkopfes 4 hin der Profilachse P_{A} annähern. Mit anderen Worten verjüngt sich der Schraubenkopf 4 zu seinem freien Ende hin, wobei der größte Durchmesser eines Umkreises 14,6 mm beträgt.

Anders als bei herkömmlichen Schrauben mit Außensechskantangriff sind die zwischen den Kanten 7 liegenden Antriebsflächen 6 des äußeren Mitnahmeprofils 5 nicht eben, sondern im Querschnitt konkav, d.h. nach innen zur Profilachse P_{A} gekrümmt ausgebildet. Konkret besitzen die konkaven Antriebsflächen 6 im Querschnitt jeweils Kreisbogensegmentform, wobei der Radius der Antriebsflächen 6 an dem zum Schaft 2 benachbarten unteren Ende des Schraubenkopfs 4 etwa R₁=13,1 mm und an dem gegenüberliegenden oberen Ende R₂=12,5 mm beträgt. Mit anderen Worten verringert sich der Krümmungsradius um etwa 0,6 mm über die Länge des Schraubenkopfes 4.

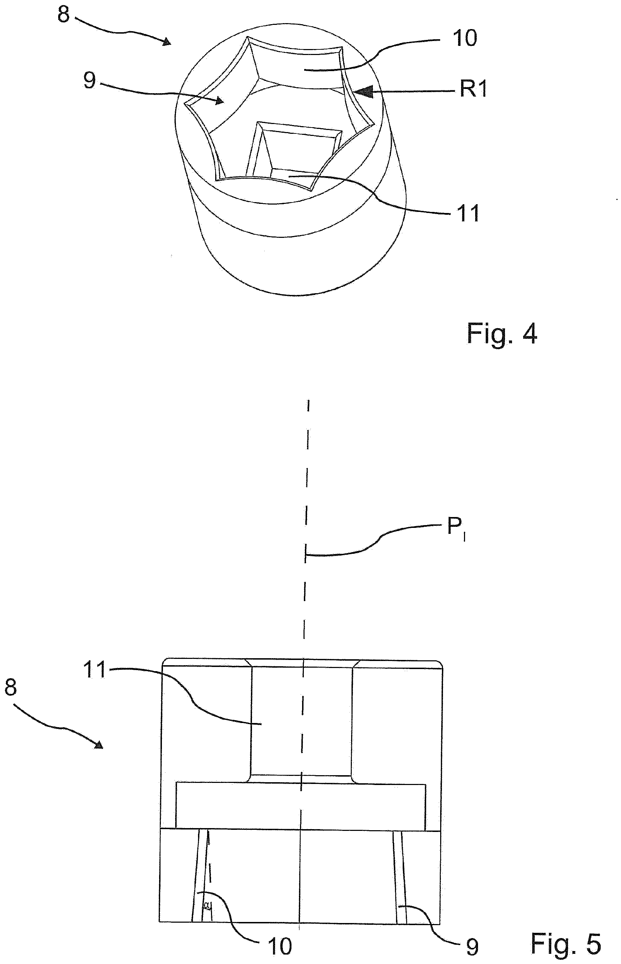

In den Figuren 4 bis 6 ist ein Drehwerkzeug 8 in der Form eines Bits mit einem inneren Mitnahmeprofil 9 gezeigt, das zur Betätigung der in den Figuren 1 bis 3 dargestellten Schraube 1 ausgebildet ist. Das Drehwerkzeug 8 besitzt ein inneres Mitnahmeprofil 9, das korrespondierend zu dem Schraubenkopf der Schraube 1 ausgebildet ist und eine Profilachse P_{I} definiert ist. Entsprechend besitzt das innere Mitnahmeprofil 9 im Querschnitt die Grundform eines Sechskants, wobei die Antriebsflächen 10 des Mitnahmeprofils 9 konkav, d.h. in Richtung der Profilachse P_{I} gekrümmt, ausgebildet sind und geneigt zu der Profilachse P_{I} verlaufen. Konkret, dabei sind die Antriebsflächen 10 unter einem Winkel von 3° gegenüber der Profilachse P_{I} geneigt, wobei sie sich ausgehend von einer Aufnahme- oder Einstecköffnung des Bits zum innerhalb des Werkzeugs 8 liegenden Ende des inneren Mitnahmeprofils 9 der Profilachse P_{I} annähern. Mit anderen Worten verjüngt sich die Kontur des inneren Mitnahmeprofils 9 nach innen hin, so dass das innere Mitnahmeprofil 9 eine zu dem äußeren Mitnahmeprofil 5 der Schraube 1 korrespondiert.

Auf der der Einsetzöffnung bzw. Aufnahmeöffnung des inneren Mitnahmeprofils 9 gegenüberliegenden Seite weist das Bit eine quadratische Aufnahme 11 auf, über welche es mit einem Bithalter oder Adapter verbunden werden kann.

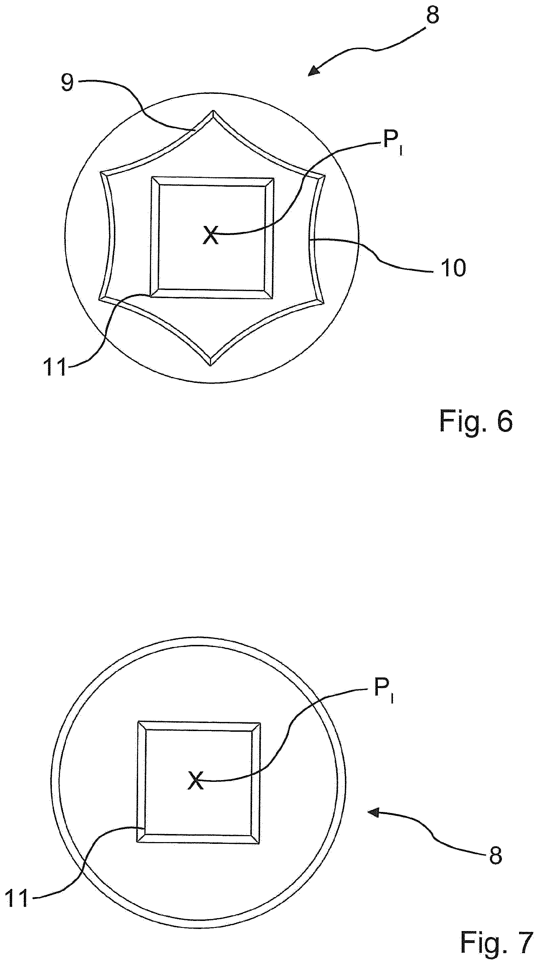

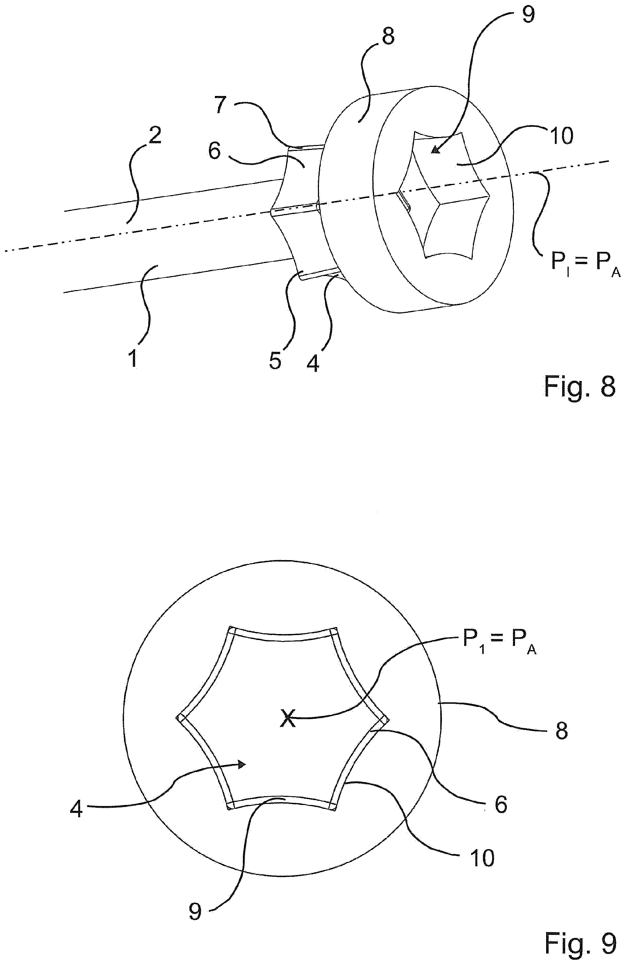

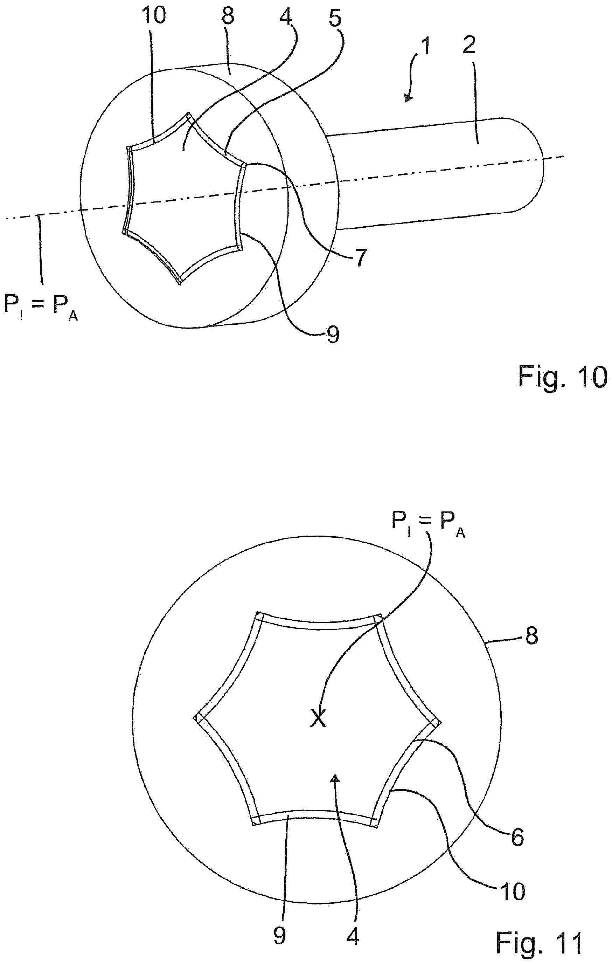

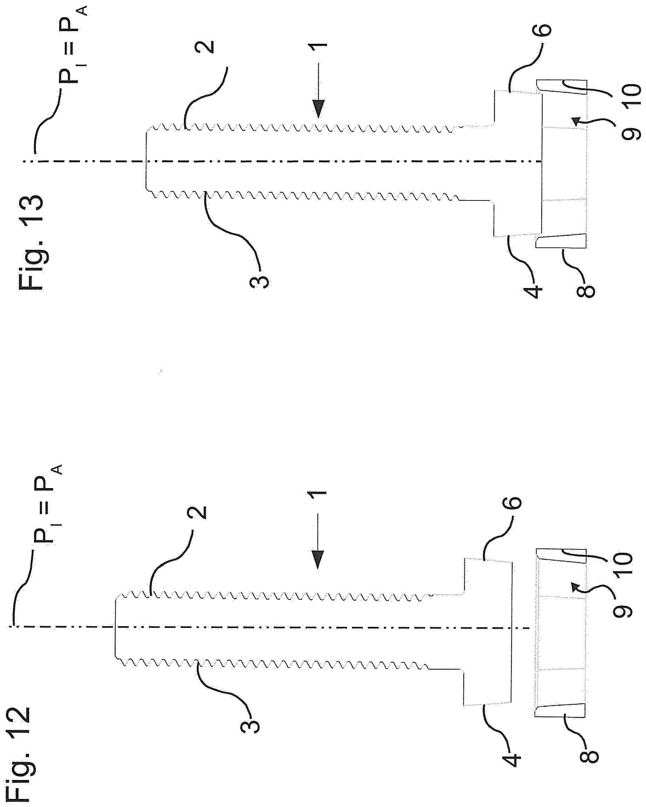

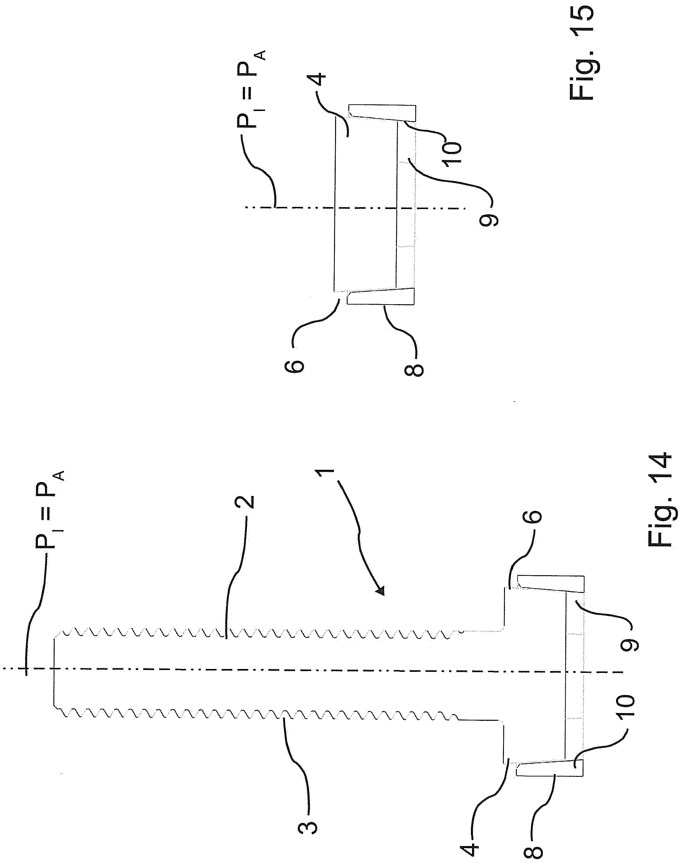

Die Abmessungen des äußeren Mitnahmeprofils 5 der Schraube 1 und des inneren Mitnahmeprofils 9 des Werkzeugs sind so gewählt, dass die Antriebsflächen 6, 10 der Mitnahmeprofile 5, 9 flächig aneinander in Anlage kommen, wenn die beiden Mitnahmeprofile 5, 9 axial zusammengesteckt werden, wie dies in den Figuren 7 bis 14 erkennbar ist. Insbesondere die Figuren 13 und 14 lassen gut erkennen, dass die Antriebsflächen 6 der Schraube 1 flächig mit den Antriebsflächen 10 des Werkzeugs 8 in Anlage kommen, so dass eine kraftschlüssige, klemmende Verbindung zwischen den Mitnahmeprofilen 2, 9 der beiden Bauteile 1, 8 hergestellt wird, in dessen Folge die beiden Bauteile 1, 8 einerseits koaxial zueinander ausgerichtet werden und andererseits auch kraftschlüssig miteinander verbunden werden, so dass sie axial aneinander fixiert sind. Daneben wird in üblicher Weise ein formschlüssige Verbindung zwischen den Mitnahmeprofilen 2, 9 der beiden Bauteile 1, 8 hergestellt, so dass eine Drehmomentübertragung von dem Werkzeug 8 auf die Schraube 1 möglich ist.

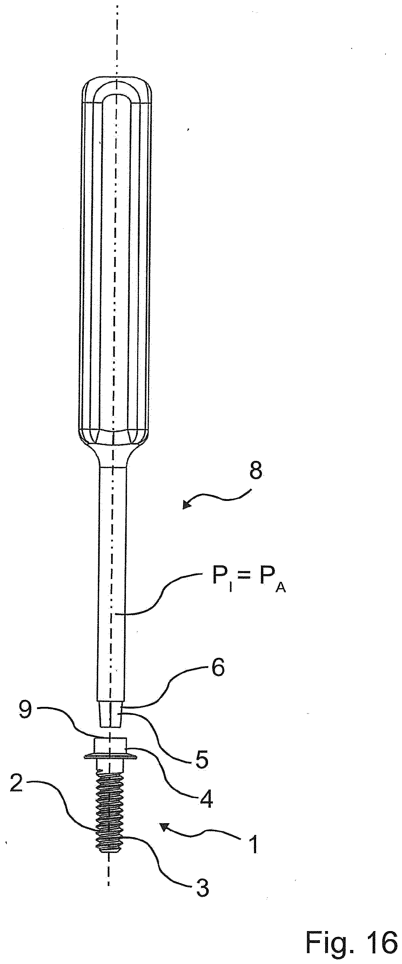

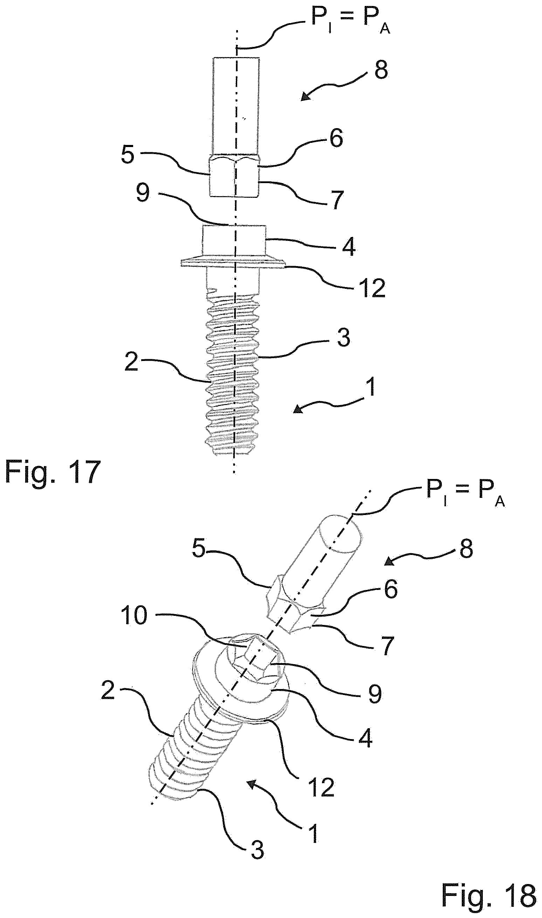

Die Figuren 15 bis 18 zeigen eine Schraube 1 und ein korrespondierendes Drehwerkzeug 8. Hierbei ist die Schraube 1 in Form eine Flanschkopfschraube mit einem Flansch 12 ausgebildet, der an der der zum Schaft 2 weisenden Seite des Schraubenkopfs 4 angeordnet ist. Die Konstellation der Mitnahmeprofile 2, 9 ist umgekehrt zu der der ersten Ausführungsform gewählt. Konkret weist die Schraube 1 nur das innere Mitnahmeprofil 9 mit innenliegenden Antriebsflächen 10 auf, während an dem Drehwerkzeug 8 das äußere Mitnahmeprofil 5 mit den außenliegenden Antriebsflächen 6 ausgebildet ist. In den Figuren 18a bis 18d ist das axiale Zusammenstecken der beiden Mitnahmeprofile 2,9 dargestellt. Dabei kommen die Antriebsflächen 6, 10 der Mitnahmeprofile 2, 9 flächig miteinander in Anlage, um einerseits eine drehfeste Verbindung zwischen den Bauteilen 1, 8 herzustellen und andererseits die Mitnahmeprofile 2, 9 kraftschlüssig zu verbinden, so dass sie axial zueinander ausgerichtet und aneinander fixiert werden. Wie in Figur 18c und 18d dargestellt ist, vergrößert sich hierbei die Flächenanlage der Antriebsflächen 6, 10, die in Form von Rechtecken dargestellt ist, bis zum vollständigen Formschluss der Schraube 1 und des Drehwerkzeugs 8, der in Figur 18d abgebildet ist.

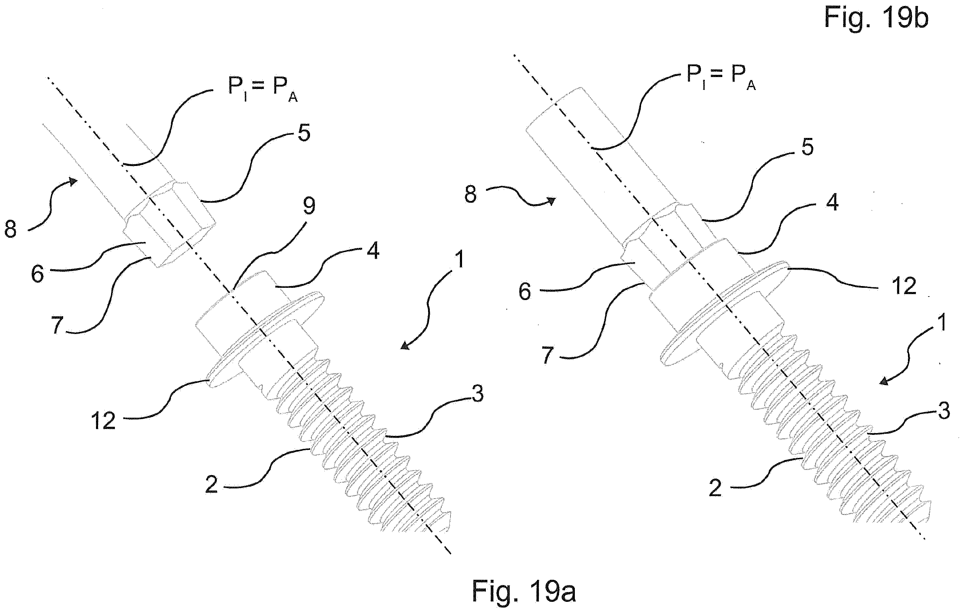

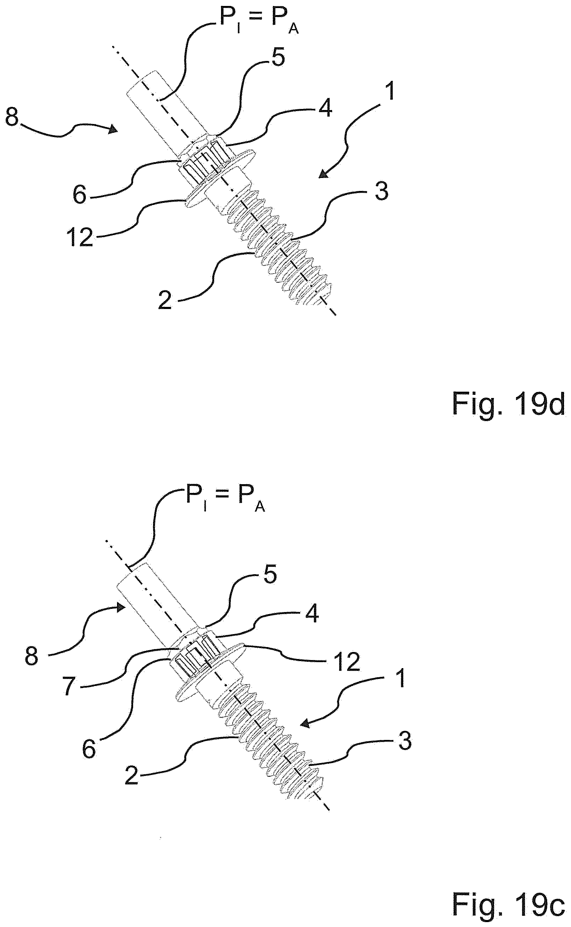

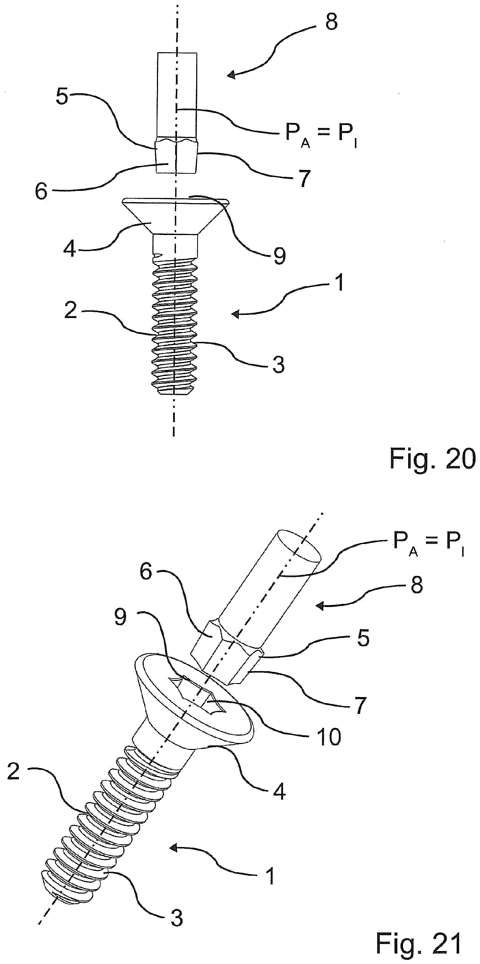

Die Figuren 19 bis 21 zeigen schließlich eine dritte Ausführungsform. Diese entspricht der zuvor erläuterten zweiten Ausführungsform mit der Maßgabe, dass die Schraube 1 als Senkkopfschraube ausgebildet ist, d.h. einen Schraubenkopf 4 besitzt, der an seiner Unterseite konusförmig zulaufend zum Schaft 2 ausgebildet ist.

## Patentansprüche

1. Verfahren zum drehfesten Verbinden zweier Bauteile, nämlich einer Schraube (1) und eines Drehwerkzeugs (8), bezüglich der Längsachse des als Schraube (1) ausgebildeten Bauteils, wobei eines der Bauteile an seinem einen freien Ende ein äußeres Mitnahmeprofil (5) mit außenliegenden Antriebsflächen (6) und das andere Bauteil an seinem einen freien Ende ein zu dem äußeren Mitnahmeprofil (5) komplementäres inneres Mitnahmeprofil (9) mit innenliegenden Antriebsflächen (10) aufweist,
wobei die Mitnahmeprofile (5, 9) jeweils eine Profilachse (P_{A}, P_{I}) definieren und die Profilachse (P_{A}, P_{I}) des als Schraube (1) ausgebildeten Bauteils koaxial zu dessen Längsachse verläuft, bei dem die Mitnahmeprofile (5, 9) der Bauteile axial zusammengesteckt werden, um durch das Zusammenwirken der Mitnahmeprofile (5, 9) eine formschlüssige, drehfeste Verbindung der Bauteile zu erzielen,
wobei ein Bauteil mit einem äußeren Mitnahmeprofil (5), dessen Antriebsflächen (6) gegenüber der jeweiligen Profilachse (P_{A}, P_{I}) geneigt sind und sich zu dem freien Ende des Bauteils hin der jeweiligen Profilachse (P_{A}, P_{I}) annähern, und ein Bauteil mit einem inneren Mitnahmeprofil (9), dessen Antriebsflächen (10) gegenüber der jeweiligen Profilachse (P_{A}, P_{I}) geneigt sind und sich zu dem freien Ende des Bauteils von der jeweiligen Profilachse (P_{A}, P_{I}) entfernen, verwendet werden, wobei Bauteile verwendet werden, deren Mitnahmeprofile (5, 9) die Querschnittskontur eines Vielkants, insbesondere eines 2-, 4- oder 6-Kants mit abgerundeten oder spitz zulaufenden Kanten (7), aufweisen **dadurch gekennzeichnet, dass** die Mitnahmeprofile (5, 9) derart komplementär zueinander ausgebildet sind, dass ihre geneigten Antriebsflächen (6, 10) beim axialen Zusammenstecken flächig miteinander in Kontakt kommen, und derart komplementär zueinander gewählt sind, dass die geneigten Antriebsflächen (6, 10) der Bauteile (1, 8) beim Zusammenstecken der Bauteile (1, 8) derart in Kontakt miteinander kommen, dass eine kraftschlüssige und/oder klemmende Verbindung zwischen den Bauteilen(1, 8) entsteht, über welche die Bauteile axial miteinander verbunden werden, wobei ein Bauteil mit einem äußeren Mitnahmeprofil (5), bei dem die zwischen den Kanten (7) liegenden geneigten Antriebsflächen (6) im Querschnitt konkav, d.h. nach innen gekrümmt ausgebildet sind, und ein Bauteil mit einem komplementären inneren Mitnahmeprofil (9) verwendet werden,
wobei ein Bauteil mit einem äußeren Mitnahmeprofil (5) verwendet wird, bei dem die konkaven Antriebsflächen (6) über ihre gesamte Länge oder zumindest im Wesentlichen über ihre gesamte Länge im Querschnitt kreisbogensegmentförmig gekrümmt ausgebildet ist.

2. Verfahren nach Anspruch 1 **dadurch gekennzeichnet, dass** Bauteile verwendet werden, bei denen die geneigten Antriebsflächen (6, 10) der Mitnahmeprofile (5, 9) um wenigstens 0,1°, insbesondere um wenigstens 0,3°, bevorzugt um wenigstens 1°, besonders bevorzugt um wenigstens 3° gegenüber der jeweiligen Profilachse (P_{A}, P_{I}) geneigt sind, und/oder dass Bauteile verwendet werden, bei denen die geneigten Antriebsflächen (6, 10) der Mitnahmeprofile (5, 9) um höchstens 12°, insbesondere um höchstens 10°, bevorzugt um höchstens 8°, besonders bevorzugt um höchstens 5° gegenüber der jeweiligen Profilachse (P_{A}, P_{I}) geneigt sind, und/oder dass Bauteile verwendet werden, bei denen die Antriebsflächen (6, 10) der Mitnahmeprofile (5, 9) stetig geneigt sind und insbesondere eine konstante Steigung aufweisen.

## Claims

1. Method for connecting two components, namely a screw (1) and a rotary tool (8), in a rotationally fixed manner with respect to the longitudinal axis of the component designed as a screw (1), wherein one of the components has an outer driving profile (5) with external drive surfaces (6) at its one free end and wherein the other component has an inner driving profile (9) at its one free end, which inner driving profile (9) is complementary to the outer driving profile (5) and has internal drive surfaces (10),
wherein the driving profiles (5, 9) each define a profile axis (P_{A}, P_{I}) and the profile axis (P_{A}, P_{I}) of the component designed as screw (1) extends coaxially to the longitudinal axis thereof, in which the driving profiles (5, 9) of the components are plugged together axially in order to achieve a positive, rotationally fixed connection of the components by the interaction of the driving profiles (5, 9),
wherein a component with an outer driving profile (5), the drive surfaces (6) of which are inclined relative to the respective profile axis (P_{A}, P_{I}) and approach the respective profile axis (P_{A}, P_{I}) towards the free end of the component, and a component with an inner driving profile (9), the drive surfaces (10) of which are inclined relative to the respective profile axis (P_{A}, P_{I}) and become averted from the respective profile axis (P_{A}, P_{I}) towards the free end of the component, are used, wherein components are used, whose driving profiles (5, 9) have the cross-sectional contour of a polygon, in particular one with 2, 4 or 6 edges, with edges (7) being rounded or pointed, **characterized in that**
the driving profiles (5, 9) are designed complementary to one another in such a way that their inclined drive surfaces (6, 10) come into contact with one another in a planar manner when being plugged together axially and that they are selected to be complementary to another in such a way that the inclined drive surfaces (6, 10) of the components (1, 8), during the pluggingtogether of the components (1, 8), come into contact with one another in such a way that a force-fit and/or clamping connection is produced between the components (1, 8), via which the components are axially connected to one another, wherein a component with an outer driving profile (5), in which the inclined drive surfaces (6) that lie between the edges (7) are concave in their cross-section, i.e. inwardly curved, and a component with a complementary inner driving profile (9) are used,
wherein a component with an outer driving profile (5) is used, in which the concave drive surfaces (6) are formed curved in the shape of a segment of a circle in cross-section over their entire length or at least substantially over their entire length.

2. Method according to claim 1, **characterized in that** components are used, in which the inclined drive surfaces (6, 10) of the driving profiles (5, 9) are inclined relative to the respective profile axis (P_{A}, P_{I}) by at least 0,1°, in particular at least 0,3°, preferably by at least 1°, particularly preferably by at least 3°, and/or **in that** components are used in which the inclined drive surfaces (6, 10) of the driving profiles (5, 9) are inclined relative to the respective profile axis (P_{A}, P_{I}) by at most 12°, in particular at most 10°, preferably at most 8°, particularly preferably at most 5°, and/or **in that** components are used in which the drive surfaces (6, 10) of the driving profiles (5, 9) are continuously inclined and in particular have a constant gradient.

## Revendications

1. Procédé pour la liaison fixe en rotation de deux composants, à savoir une vis (1) et un outil rotatif (8), par rapport à l'axe longitudinal du composant conçu comme une vis (1), l'un des composants ayant à l'une de ses extrémités libres un profil d'entraînement extérieur (5) avec des surfaces d'entraînement extérieures (6) et l'autre composant ayant à l'une de ses extrémités libres un profil d'entraînement intérieur (9) qui est complémentaire du profil d'entraînement extérieur (5) et qui présente des surfaces d'entraînement intérieures (10),
les profils d'entraînement (5, 9) définissant chacun un axe de profil (P_{A}, P_{I}) et l'axe de profil (P_{A}, P_{I}) du composant conçu comme une vis (1) s'étendant coaxialement à l'axe longitudinal de celui-ci, dans lequel les profils d'entraînement (5, 9) des composants sont emboîtés axialement les uns dans les autres afin d'obtenir une liaison positive, fixe en rotation, des composants par l'interaction des profils d'entraînement (5, 9),
un composant avec un profil d'entraînement extérieur (5), dont les surfaces d'entraînement (6) sont inclinées par rapport à l'axe de profil respectif (P_{A}, P_{I}) et se rapprochent de l'axe de profil respectif (P_{A}, P_{I}) vers l'extrémité libre du composant, et un composant avec un profil d'entraînement intérieur (9), dont les surfaces d'entraînement (10) sont inclinées par rapport à l'axe de profil respectif (P_{A}, P_{I}) et s'éloignent vers l'extrémité libre de la pièce de l'axe de profil respectif (P_{A}, P_{I}), étant utilisés, des composants, dont les profils d'entraînement (5, 9) ont le contour en section transversale d'un polygone, en particulier de deux, quatre ou six pans avec des bords arrondis ou pointus (7), étant utilisés, **caractérisé en ce que**
les profils d'entraînement (5, 9) sont conçus pour être complémentaires les uns des autres de telle sorte que leurs surfaces d'entraînement inclinées (6, 10) entrent en contact les unes avec les autres de manière plane lors de l'emboîtement axial, et sont choisis pour être complémentaires les uns des autres de telle sorte que les surfaces d'entraînement inclinées (6, 10) des composants (1, 8) entrent en contact les unes avec les autres de manière plane lors de l'emboîtement des composants (1, 8) entrent en contact l'un avec l'autre de telle sorte qu'il se crée entre les composants (1, 8) une liaison par force et/ou par serrage, par laquelle les composants sont reliés axialement entre eux, un composant avec un profil d'entraînement extérieur (5), dans lequel les surfaces d'entraînement inclinées (6) se trouvant entre les bords (7) sont concaves, d. c'est-à-dire courbé vers l'intérieur, et un composant avec un profil d'entraînement intérieur complémentaire (9) étant utilisés,
un composant avec un profil d'entraînement extérieur (5) étant utilisé, dans lequel les surfaces d'entraînement concaves (6) sont courbées en forme de segment de cercle en section transversale sur toute leur longueur ou au moins sensiblement sur toute leur longueur.

2. Procédé selon la revendication 1, **caractérisé en ce que** l'on utilise des composants dans lesquels les surfaces d'entraînement inclinées (6, 10) des profils d'entraînement (5, 9) sont inclinées d'au moins 0,1°, en particulier d'au moins 0,3°, de préférence d'au moins 1°, en particulier de préférence d'au moins 3°, par rapport à l'axe de profil respectif (P_{A}, P_{I}), et/ou **en ce que** l'on utilise des composants dans lesquels les surfaces d'entraînement inclinées (6, 10) des profils d'entraînement (5, 9) sont inclinées de 12° au maximum, en particulier de 10° au maximum, de préférence de 8° au maximum, en particulier de préférence de 5° au maximum, par rapport à l'axe de profil respectif (P_{A}, P_{I}), et/ou **en ce que** l'on utilise des composants dans lesquels les surfaces d'entraînement (6, 10) des profils d'entraînement (5, 9) sont inclinées de manière continue et présentent en particulier une pente constante.
